# EUROPEAN PATENT APPLICATION

(11) **EP 4 765 180 A1**
(43) Date of publication of application: **24.06.2026**
(21) Application number: 24221953.3
(22) Date of filing: 19.12.2024
(51) Int. Cl.: H01H 3/40, F16H 25/00

(54) **OPERATING MECHANISM FOR A SWITCHING DEVICE AND SWITCHING DEVICE**

(71) Applicant: Hitachi Energy Ltd, 8050 Zürich (CH)
(72) Inventor: Kabosch, Dino, 5408 Ennetbaden (CH); Baechtiger, Ruven, 9000 St. Gallen (CH)
(74) Representative: Michalski Hüttermann & Partner mbB

(57) **Abstract**

The invention relates to an operating mechanism for a switching device (601), comprising a motor (1), an axially extending screw rod (701) and a spindle nut (702), whereby the screw rod (701) is connected to the motor (1) and configured for being rotated by the motor (1), the spindle nut (702) is movable engaged with the screw rod (701) and configured to move linearly along the screw rod (701) when the screw rod (701) rotates, and the screw rod (701) comprises a chamfered thread tip (706) insertable into the spindle nut (702), whereby the chamfered thread tip (706) comprises a first chamfered surface (708) extending in a first angle (α) relative to the axial extension of the screw rod (701) and a second chamfered surface (709) extending in a second angle (β) relative to the axial extension of the screw rod (701) and greater than the first angle (α).

## Description

### Technical Field

The invention relates to an operating mechanism for a switching device, comprising a motor, an axially extending screw rod and a spindle nut, whereby the screw rod is connected to the motor and configured for being rotated by the motor, and the spindle nut is movable engaged with the screw rod and configured to move linearly along the screw rod when the screw rod rotates. The invention further relates to the switching device comprising a moving contact and the operating mechanism, whereby the operating mechanism is configured to operate the moving contact to achieve an opening or closing operation of the switching device.

### Background Art

Transmission operating mechanism for switching devices such as earthing switches with short circuit making capability often comprise a spindle drive mechanism comprising an axially extending screw rod and a spindle nut comprising respective threads for engaging with the screw rod. At an end of a switching operation the spindle nut usually leaves the threads of the screw rod. Thus, for subsequent operations the spindle nut needs to re-engage with the threads of the screw. However, cross-threading may occur, and the spindle nut gets jammed so that the operating mechanism cannot execute the switching operation.

Such cross-threading occurs in particular when the threads of the screw rod and the spindle nut do not properly align in respective parts of the screw rod and the spindle nut being engaged respectively fastened during re-engagement. Thus, for better alignment the threads of such screw connection are often chamfered with a 45° angle. However, just applying a 45° chamfer to the threads of the screw connection does in practise not reliably prevent from said cross-threading. In fact, due to the 45° chamfer, male and female threads the screw rod and the spindle nut are often shifted relative to each other. This often results in a tip respectively start of the male thread of the screw rod being radially above the female thread of the spindle nut. If an attempt is now made to screw the threads together, jamming occurs. In sum, solutions known from prior art for re-engaging the screw rod with the spindle nut of operating mechanism in particular for earthing switches are not satisfying.

### Summary of invention

It is therefore an object of the invention to provide an operating mechanism for a switching device allowing a re-engagement of a screw rod with a spindle nut without cross-threading.

The object of the invention is solved by the features of the independent claims. Preferred implementations are detailed in the dependent claims.

Thus, the object is solved by an operating mechanism for a switching device, comprising
a motor, an axially extending screw rod and a spindle nut, whereby
the screw rod is connected to the motor and configured for being rotated by the motor,
the spindle nut is movable engaged with the screw rod and configured to move linearly along the screw rod when the screw rod rotates, and
the screw rod comprises a chamfered thread tip insertable into the spindle nut, whereby the chamfered thread tip comprises a first chamfered surface extending in a first angle relative to the axial extension of the screw rod and a second chamfered surface extending in a second angle relative to the axial extension of the screw rod and greater than the first angle.

The solution thus proposes adding a second chamfer i.e. the second chamfered surface in addition to a common first chamfer i.e. first chamfered surface by therefore preventing cross-threading when re-engaging respectively re-connecting the screw rod with the spindle nut. This second chamfer of a such wise proposed two-angle chamfer prevents a tip of a typically male thread of the screw rod being radially above a typically female thread of the spindle nut. Thanks to the second angle of the second chamfered surface the tip of the male thread is such wise shifted toward a chamfered surface of the female thread during re-engagement. With such solution, cross-threading is effectively prevented when screwing the threads together respectively when re-connecting the screw rod with the spindle nut.

Normally, a right-hand thread is turned counterclockwise until a typical clicking sound is heard indicating re-connection of the respective threads. Once the click is heard, the threads are aligned and the threads respectively the screw rod and the spindle can be engaged without cross-threading like milling by turning clockwise. However, before the clicking sound in prior art solutions the tip respectively start of the male thread maybe radially above the female thread. This is the situation where in said prior art solutions cross-threading occurs. If an attempt is now made to screw the threads together, jamming occurs. With the proposed two-angled-chamfer on the male thread this situation where the tip of the male thread being radially above the female thread is prevented and cross-threading does not occur.

Such two-angle chamfer on the screw rod, preferably on the male thread of the screw rod, is much simpler in specification and manufacturing. The two-angle chamfer can be applied at an initial turning process before cutting the actual thread. Thus, with such the two-angle chamfer applied on a spindle of the operating mechanism of, for example, an earthing switch with short circuit making capability before described said spindle engagement issue can be resolved, which in turn leads to lower operating respectively repair costs by in turn increasing system uptime.

As mentioned, the proposed operating mechanism can be applied to any switching device where re-engaging of the screw rod with the spindle nut occurs, for example to an earthing switch. In this respect re-engaging means preferably that the chamfered thread tip is inserted into to spindle nut such that, when inserted, rotation of the screw rod linearly moves the spindle nut. The first chamfered surface and/or the second chamfered surface preferably extend circumferentially around an axis defined by the axially extending screw rod. Thus, the first chamfered surface and the second chamfered surface are tilted in respect to said axis by the first angle respectively the second angle.

According to a preferred implementation the first angle is ≥ 30° and ≤ 50°, preferably 45°, and/or the second angle is ≥ 55° and ≤ 85°, preferably 75°. Preferably the first angle is ≥ 35° or ≥ 40° and/or ≤ 50°, and/or the second angle is ≥ 60°, ≥ 65°, and ≤ 80°. Further preferably, the first angle and/or the second angle may increase over the axial extension of the first chamfered surface and/or the second chamfered surface. For example, the first angle may increase from 30° to 50°.

In another preferred implementation, in axial direction towards the chamfered thread tip, the chamfered thread tip initially tapers with the first chamfered surface and thereafter with the second chamfered surface. Thus, in axial direction towards the chamfered thread tip, the screw rod first comprises the first chamfered surface, which tapers with the first angle, and thereafter the screw rod second comprises the second chamfered surface, which tapers with the second angle. In other words, the chamfered thread tip, in axial direction towards the chamfered thread tip, preferably becomes sharper.

According to a further preferred implementation, in axial direction towards the chamfered thread tip, the first chamfered surface seamlessly transitions into the second chamfered surface. The first chamfered surface and the second chamfered surface are preferably arranged, in axial direction, subsequent, behind and/or side by side each other. Preferably, in axial top view onto the chamfered thread tip, the first chamfered surface and the second chamfered surface extend across a complete radial extension of the chamfered thread tip.

In another preferred implementation the first chamfered surface and/or the second chamfered surface, in axial direction towards the chamfered thread tip, extend in a linear or a convex manner. Preferably, the first chamfered surface and/or the second chamfered surface extend, in axial top view onto the chamfered thread tip, extend between an inner radial end and an outer radial end, such wise in radial direction, in a linear or a convex manner.

According to a further preferred implementation the spindle nut comprises a female thread having a thread flank and the second angle is shifted, is aligned, equals or does not equal an angle of the thread flank, in particular relative to the axial extension of the spindle nut and/or the screw rod. Such measure avoids very effectively before described cross-threading.

In another preferred implementation the first chamfered surface extends ≥ 180°, preferably ≥ 270°, and/or < 360° around the chamfered thread tip and/or the second chamfered surface extends ≥ 180°, preferably ≥ 270°, and/or < 360° around the chamfered thread tip. Preferably, the first chamfered surface and/or the second chamfered surface extends in axial top view onto the chamfered thread tip circumferentially around the chamfered thread tip by said angle.

According to a further preferred implementation only a last thread of the screw rod, in particular the chamfered thread tip of the screw thread, comprises the first chamfered surface and the second chamfered surface. Preferably the screw rod and/or the spindle nut comprise a plurality of respective threads extending in a helix-like manner. The screw rod thus preferably comprises machine-like screw threads having an equal radial diameter and equal threads along the axial extension, whereby only the thread of the screw rod comprises the first chamfered surface and the second chamfered surface.

In another preferred implementation the chamfered thread tip comprises a third chamfered surface extending in a third angle relative to the axial extension of the screw rod and greater than the second angle. The second chamfered surface is preferably arranged, in radial and/or axial direction, between the first chamfered surface and the third chamfered surface. With such three-angled-chamfer cross-threading can even more effectively prevented.

According to a further preferred implementation the screw rod comprises a male thread, in particular a plurality of helical extending male threads, comprising the chamfered thread tip and the spindle nut comprises a female thread, in particular a plurality of helical extending female threads, corresponding to the male thread.

Chamfered surfaces of the male thread and the female thread preferably correspond to each other and/or extend in a same or nearly the same angle.

In another preferred implementation the operating mechanism comprises a rotatable output shaft configured for achieving an opening or closing operation of the switching device by rotation and connected in terms of movement to the spindle nut. The rotatable output shaft can also be referred to as output to hub or main hub and is intended for achieving the opening or closing operation of the switching device by rotation.

The object is further solved by a switching device comprising a moving contact and the operating mechanism as described before, whereby the operating mechanism is configured to operate the moving contact to achieve an opening or closing operation of the switching device. The switching device, sometimes also referred to as switchgear device, may comprise two contacts, of which one contact is movable in relation to the other contact. Said moving contact can be movable between a closed position, in which the contacts are electrically connected, and an open position, in which the contacts are unconnected. The moving contact can be provided as tulip contact and the other contact for example fixed contact can be provided as plug contact, or otherwise vice versa. Also, both contacts can be arranged movable in respect to each other.

In another preferred implementation the switching device is provided as an earthing switch with short circuit capability, a disconnector, an isolating and earthing switch, and/or as a fast-acting earthing switch of a gas insulated switchgear. The earthing switch respectively fast earthing switch for interrupting non-short-circuit currents is preferably provided as a device designed for interrupting non short-circuit currents only, in particular as a disconnector, more particularly as a high voltage disconnector, or as said earthing switch, more particularly as a make-proof earthing switch, or as a medium voltage or high voltage gas-insulated switchgear, GIS, comprising such a device. The term "short-circuit currents", as opposed to non-short circuit currents, can be understood as currents that are established in a first, transient phase of up to approximately three seconds after a point in time, when from a grid operated under high voltage parts under high voltage get connected to ground. According to such definition, the term "non short-circuit currents" preferably relates to any currents not falling under the definition of "short-circuit currents" given above.

Generally, a disconnector or earthing switch, also known as a grounding switch, is often understood as a protective device included in switchgear components like circuit breakers and isolators. When circuit breakers are removed and racked out, earthing switches automatically ground a part of a bus bar adjacent to the circuit breakers. For isolators, the earthing switches make contact with the bus bar when the isolator isolates the circuits, discharging any charges that may have gathered there. For example, an earthing switch in switchgear is used to ground a remaining change in a power line after the power line has been removed from its source. A residual charge often remains in a circuit after it has been severed or opened by the circuit breaker and isolator. An earthing switch is usually provided to dis-charge the charge.

Such disconnector or earthing switches are usually designed to withstand short circuits. The disconnector or earthing switch in a substation often has an ability to create short circuits in order to safeguard other electrical devices from damage. The disconnector or earthing switch is often used with several high-voltage switchgear and also serves as a protective device in an overhaul of high-voltage electrical equipment.

### Brief description of drawings

These and other aspects of the invention will be apparent from and elucidated with reference to the implementations described hereinafter.

In the drawings:
- Fig. 1: is a schematic view showing a partial structure of an operating mechanism according to a preferred implementation;
- Fig. 2: is a schematic view showing a partial structure of the operating mechanism of Fig. 1, viewed from another perspective;
- Fig. 3: is a schematic view showing a partial structure of the operating mechanism of Fig. 1, viewed from yet another perspective;
- Fig. 4: is a technical drawing showing a partial structure of the operating mechanism of Fig. 1 in a partially sectional side view with a screw rod being inserted into a spindle nut;
- Fig. 5a: is a partially sectional side view of the screw rod being inserted into the spindle nut of Fig. 4;
- Fig. 5b: is a partial structure of Fig. 5a;
- Fig. 6a: is a top view onto a chamfered thread tip of the screw rod of Fig. 5a; and
- Fig. 6b: is partial side view of the screw rod of Fig. 5a.

### Description of implementations

The implementation and usage of the proposed solution is discussed in detail below. However, it is conceivable that the specific implementations discussed herein are merely intended to illustrate specific ways of implementing and using the proposed solution, and are not intended to limit the protection scope of the proposed solution.

When describing the structures and positions of the components, the directional expressions, such as "top", "bottom", "upper", "lower", "clockwise", and "counter-clockwise", are not absolute, but relative. When the components are arranged as shown in the drawings, these directional expressions are appropriate, but when the positions of these components in the drawings are altered, these directional expressions should be altered accordingly.

In addition, the terms, such as "mounted to" and "connected to", should be understood in a broad sense unless otherwise specified and defined. For example, "connected to" may be "fixedly connected to", "detachably connected to" or "integrally connected to", may be "mechanically connected to" or "electrically connected to", and may be "directly connected to", "indirectly connected to" or "associated with (something) under some effect". For those skilled in the art, the specific meanings of the above terms can be understood according to specific circum-stances.

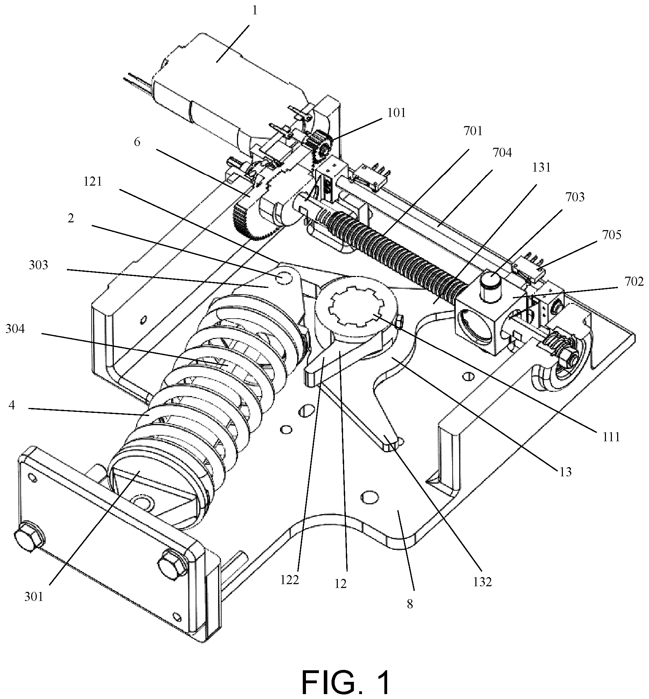

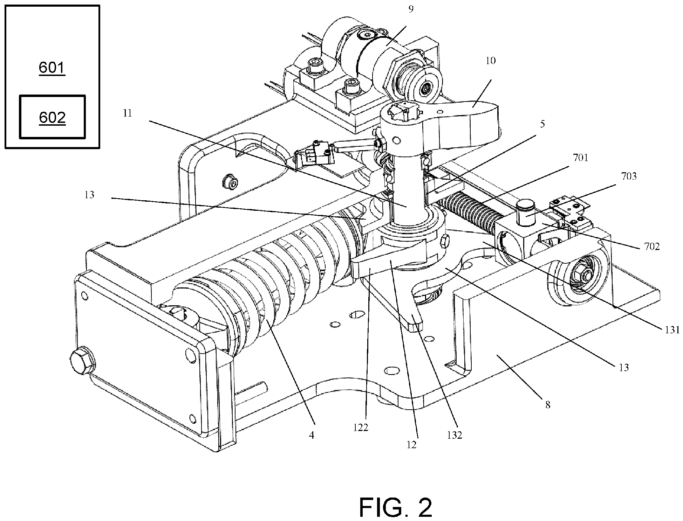

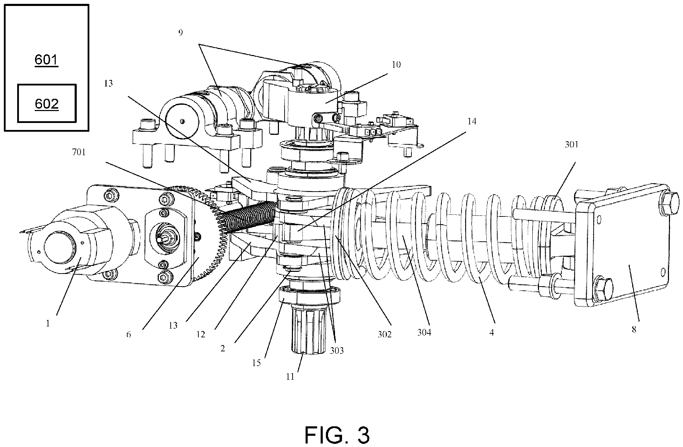

It is conceivable that a switchgear device 601 to which an operating mechanism is applied comprises but is not limited to an earthing switch, a disconnector, an isolating and earthing switch, and a fast-acting earthing switch of a gas insulated switchgear, GIS. The specific structure of the operating mechanism according to a preferred implementation is described below with reference to Figs. 1 to 3. Besides that other implementations, even though not described, are possible as well.

As shown in Figs. 1 to 3, the operating mechanism mainly comprises a base support 8, and a power module, an energy storage module and a drive module, each of which is mounted to the base support 8. The power module mainly comprises a motor 1 and a screw rod-nut transmission device connected to the motor 1. More specifically, the motor 1 used for providing power is fixedly mounted to the base support 8, and is configured to transmit power to the screw rod-nut transmission device by means of a first transmission gear 101 fixedly sleeved on an output shaft of the motor 1 and a second trans-mission gear 6 engaged with the first transmission gear 101.

The screw rod-nut transmission device comprises components such as an axially extending screw rod 701, a spindle nut 702, a protrusion 703, a limiting rod 704, and a microswitch 705. Two ends of the screw rod 701 are rotatably mounted to the base support 8 by means of, for example, bearings. The second transmission gear 6 is sleeved on and non-rotatable relative to the screw rod 701 to drive the screw rod 701 to rotate under the drive of the motor 1. It is conceivable that the type of the screw rod 701 comprises but is not limited to a ball screw rod or a trapezoidal screw rod. The nut 702 is sleeved on the screw rod 701 and capable of moving linearly along the screw rod 701 when the screw rod 701 rotates.

Further, each of the top and bottom surfaces of the nut 702 is provided with the protrusion 703, for example a protruding pin integrally formed on the nut 702, used for pushing an energy storage lever 13, see the following description. The limiting rod 704 is mounted to the base support 8 and is parallel to the screw rod 701, so as to limit the position of the nut 702 when the nut 702 moves along the screw rod 701, thereby avoiding rotation of the nut 702. The microswitches 705 are mounted to the limiting rod 704 and are adjacent to two ends of the screw rod 701, so as to send a control signal, such as a stopping signal, to the motor 1 when the nut 702 moves to come into contact with the microswitches 705.

The energy storage module comprises two energy storage levers 13 and an energy storage spring 4 mounted to a spring support. More specifically, each energy storage lever 13 is sleeved on and rotatable relative to an output shaft 11 by means of, for example, a first bearing/shaft sleeve 5, and is configured to present an approximately Y-shape. That is to say, the energy storage lever 13 comprises a first pushing arm 131 and a second pushing arm 132 that are arranged symmetrically with respect to each other in an approximately V-shape and capable of being pushed to rotate by the protrusion 703 of the nut 702, and the end of the energy storage lever 13 opposite to the two pushing arms is provided with an opening for a connecting pin 2 to pass through.

The spring support comprises a first spring support 301 mounted to the base support 8 and a second spring support 302 that is opposite to the first spring support 301 and capable of moving towards or away from the first spring support 301. The spring 4 is spirally arranged on a guide rod 304 between the first spring support 301 and the second spring support 302 to be compressed between the first spring support 301 and the second spring support 302 to store energy. The second spring support 302 is integrally provided with two connecting plates 303 that protruding in a direction away from the first spring support 301. Each connecting plate 303 is provided with an opening for the connecting pin 2 to pass through, such that the two energy storage levers 13 are pivotally connected to the spring 4 by means of the connecting pin 2.

In the illustrated implementation, the two connecting plates 303 are arranged between the two energy storage levers 13, and a shaft sleeve 14 arranged between the two connecting plates 303 is sleeved on the connecting pin 2, that is, the connecting pin 2 passes through the lower energy storage lever 13, the lower connecting plate 303, the shaft sleeve 14, the upper connecting plate 303, and the upper energy storage lever 13 from bottom to top in sequence. Thus, when the energy storage lever 13 is pushed by the nut 702 to rotate under the drive of the power module, it can drive the spring support and the spring 4 to rotate by means of the connecting pin 2, such that the spring 4 is compressed to store energy.

The drive module comprises a drive lever 12 and the output shaft 11. More specifically, two ends of the output shaft 11 are rotatably mounted to the base support 8 by means of, for example, second bearings 15, and the output shaft 11 is connected to a moving contact 602 of the switchgear device 601, such that the rotation of the output shaft 11 drives the moving contact 602 to move so as to achieve the opening and closing operations of the switchgear device 601. The drive lever 12 is sleeved on and non-rotatable relative to the output shaft 11 by means of, for example, a spline 111, such as an external spline formed on the output shaft 11 and an internal spline formed on the drive lever 12, to drive the output shaft 11 to rotate, and is configured to present an approximately V-shape.

That is to say, the drive lever 12 comprises a third pushing arm 121 and a fourth pushing arm 122 that are arranged symmetrically with respect to each other in an approximately V-shape and capable of being pushed to rotate by the connecting pin 2, specifically by the shaft sleeve 14 arranged on the connecting pin 2. In the illustrated implementation, the two energy storage levers 13 sleeved on the output shaft 11 are arranged on two sides of the drive lever 12 respectively. That is, the output shaft 11 passes through the lower energy storage lever 13, the drive lever 12, and the upper energy storage lever 13 from bottom to top in sequence.

The damping module comprises two absorbers 9 mounted to the base support 8 and a damping arm 10 fixedly connected to one end of the output shaft 11. The damping arm 10 contacts the corresponding absorber 9 during an end stage of the opening or closing operation of the switchgear device 601, so as to reduce the movement speed of the moving contact 602 in the end stage and achieve the limitation of its position.

By coordinating the parameters such as the angle between the two pushing arms of the energy storage lever 13, the angle between the two pushing arms of the drive lever 12, and the positions of the screw rod-nut transmission device and the output shaft 11, etc., the spring 4 is allowed, during at least one of the opening and closing operations of the switchgear device 601, to release energy and to drive the drive lever 12 to rotate by means of the connecting pin 2 only after that the spring 4 rotates until it passes through its dead-point position, so as to achieve the operations, such as "fast-closing and fast-opening", "fast-closing and slow-opening", and "fast-opening and slow-closing" operations of the switchgear device 601.

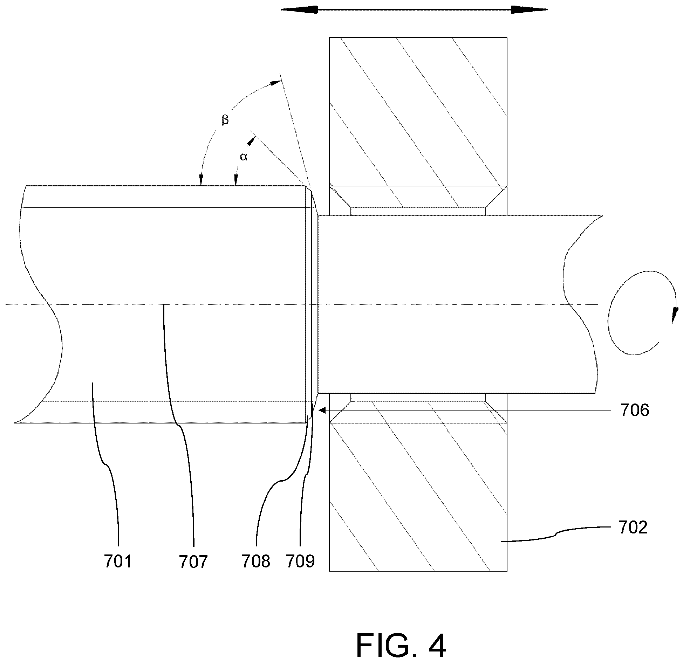

Fig. 4 is a technical drawing showing a partial structure of the operating mechanism of Fig. 1 in a partially sectional side view with the screw rod 701 being inserted into for being engaged with the spindle nut 702. Threads of the along axis 707 axially extending screw rod 701 and the spindle nut 702 are not shown and are not engaged yet. The screw rod 701 comprises, in Fig. 4 facing the spindle nut 702, a chamfered thread tip 706, behind which, in axial direction away from the spindle nut 702 the non-shown threads of the screw rod 701 are arranged, as can be seen in later Figs. Said non-shown threads are intended to extend radially away from a core diameter of the screw rod 701. The chamfered thread tip 706, being basically the last threat, extends radially between the core diameter and an outside diameter of the screw rod 701.

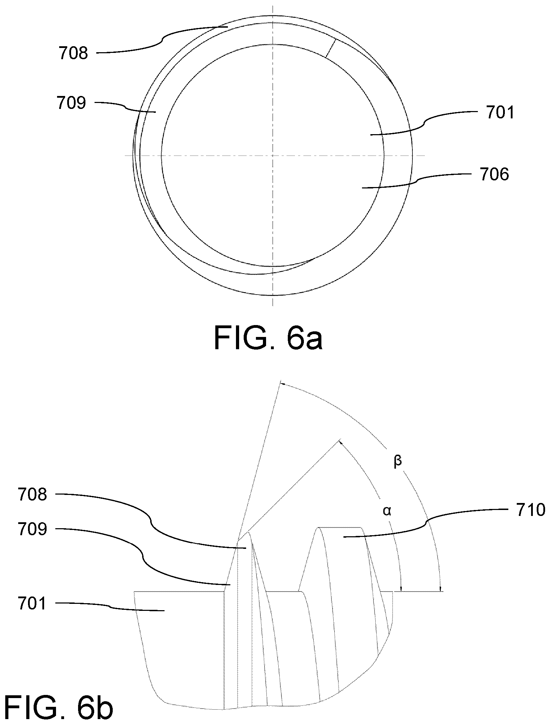

Said chamfered thread tip 706 comprises a first, outer chamfered surface 708 and a second, inner chamfered surface 709, whereby, in axial top view onto the chamfered thread tip 706, the first chamfered surface 708 is radially further away from the axis 707 than the second chamfered surface 709, as can be seen from Fig. 6a showing a top view onto the chamfered thread tip 706 of the screw rod 701. In other words, the first chamfered surface 708 at least partially surrounds the second chamfered surface 709. Thus, in axial direction towards the chamfered thread tip 706 respectively away from the axis, the chamfered thread tip 706 initially tapers, starting from the outside diameter, with the first chamfered surface 708 and thereafter with the second chamfered surface 709 reaching up to the core diameter.

The first chamfered surface 708 extends in a first angle α relative to the axial extension of the screw rod 701 i.e. the axis 707 and the second chamfered surface 709 extends in a second angle β relative to the axial extension of the screw rod 701, whereby the second angle β is greater than the first angle α. The first angle α is ≥ 30° and ≤ 50°, and presently 45°. The second angle β is ≥ 55° and ≤ 85° and presently 75°. Thereby, the first chamfered surface 708 seamlessly transitions into the second chamfered surface 709 having a 'kink' of 30° between the respective, linearly extending first chamfered surface 708 and second chamfered surface 709.

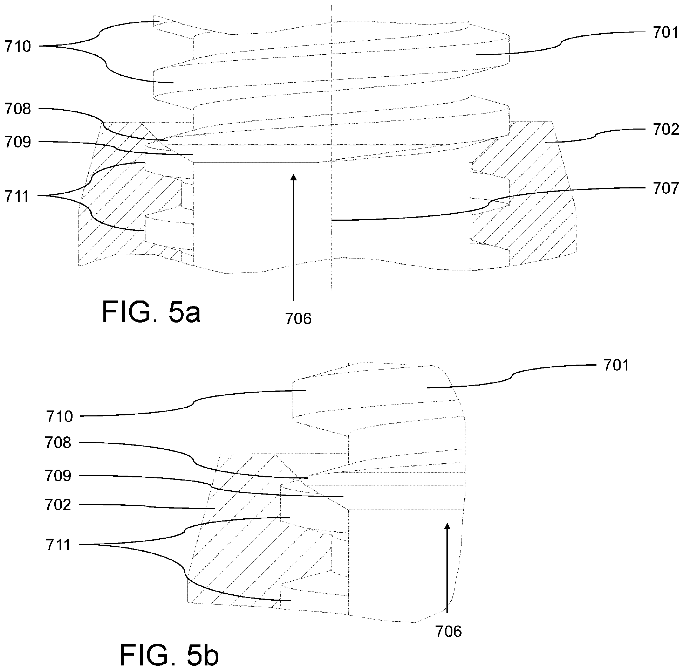

Fig. 5a shows a partially sectional side view of the screw rod 701 being inserted into the spindle nut 702 of Fig. 4, while Fig. 5b shows a partial structure of Fig. 5a, with a last or first possible point of contact between threads of the screw rod 701 and spindle nut 702. In axial direction 'behind' the chamfered thread tip 706 the screw rod 701 comprises a plurality of male threads 710, starting with the chamfered thread tip 706, as last respectively first thread 710 comprising the first chamfered surface 708 and the second chamfered surface 709, and extending in helical manner away from the chamfered thread tip 706. The spindle nut 702 comprises a plurality of female threads 711 corresponding to the male threads 710. Thereby, the female threads 711 each comprise a thread flank having an angle that is aligned respectively equals the second angle β.

As mentioned, Fig. 6a is a top view onto the chamfered thread tip 706 of the screw rod 701 of Fig. 5a and Fig. 6b shows a partial side view of the screw rod 701 of Fig. 5a. As can be seen from Fig. 6a, the first chamfered surface 708 extends around 180° around the chamfered thread tip 706 and the second chamfered surface 709 extends around 180° around the chamfered thread tip 706. While not shown, the chamfered thread tip 706 may comprise a third chamfered surface extending in a third angle relative to the axial extension of the screw rod 701 and greater than the second angle β, whereby the second chamfered surface 709 is arranged between the first chamfered surface 708 and the third chamfered surface.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: motor
- 2: connecting pin
- 4: energy storage spring
- 5: first bearing/shaft sleeve
- 6: second transmission gear
- 8: base support
- 9: absorber
- 10: damping arm
- 11: output shaft, main hub
- 12: drive lever, actuating lever
- 13: energy storage lever, spring charging lever
- 14: shaft sleeve
- 15: second bearings
- 101: first transmission gear
- 111: spline
- 121: third pushing arm
- 122: fourth pushing arm
- 131: first pushing arm
- 132: second pushing arm
- 301: first spring support
- 302: second spring support
- 303: connecting plate
- 304: guide rod
- 601: switchgear device
- 602: moving contact
- 701: screw rod
- 702: spindle nut
- 703: protrusion
- 704: limiting rod
- 705: microswitch
- 706: chamfered thread tip
- 707: axis
- 708: first chamfered surface
- 709: second chamfered surface
- 710: male thread
- 711: female thread
- α: first angle
- β: second angle

## Claims

1. A operating mechanism for a switching device (601), comprising
a motor (1), an axially extending screw rod (701) and a spindle nut (702), whereby
the screw rod (701) is connected to the motor (1) and configured for being rotated by the motor (1),
the spindle nut (702) is movable engaged with the screw rod (701) and configured to move linearly along the screw rod (701) when the screw rod (701) rotates, and
the screw rod (701) comprises a chamfered thread tip (706) insertable into the spindle nut (702), whereby the chamfered thread tip (706) comprises a first chamfered surface (708) extending in a first angle (α) relative to the axial extension of the screw rod (701) and a second chamfered surface (709) extending in a second angle (β) relative to the axial extension of the screw rod (701) and greater than the first angle (α).

2. The operating mechanism according to the previous claim, whereby the first angle (α) is ≥ 30° and ≤ 50°, preferably 45°, and/or the second angle (β) is ≥ 55° and ≤ 85°, preferably 75°.

3. The operating mechanism according to any of the previous claims, whereby, in axial direction towards the chamfered thread tip (706), the chamfered thread tip (706) initially tapers with the first chamfered surface (708) and thereafter with the second chamfered surface (709).

4. The operating mechanism according to any of the previous claims, whereby, in axial direction towards the chamfered thread tip (706), the first chamfered surface (708) seamlessly transitions into the second chamfered surface (709).

5. The operating mechanism according to any of the previous claims, whereby the first chamfered surface (708) and/or the second chamfered surface (709), in axial direction towards the chamfered thread tip (706), extend in a linear or a convex manner.

6. The operating mechanism according to any of the previous claims, whereby the spindle nut (702) comprises a female thread (711) having a thread flank and the second angle (β) is shifted, is aligned, equals or does not equal an angle of the thread flank.

7. The operating mechanism according to any of the previous claims, whereby the first chamfered surface (708) extends ≥ 180°, preferably 270°, and/or < 360° around the chamfered thread tip (706) and/or the second chamfered surface (709) extends ≥ 180°, preferably ≥ 270°, and/or < 360° around the chamfered thread tip (706).

8. The operating mechanism according to any of the previous claims, whereby only a last thread of the screw rod (701) comprises the first chamfered surface (708) and the second chamfered surface (709).

9. The operating mechanism according to any of the previous claims, whereby the chamfered thread tip (706) comprises a third chamfered surface extending in a third angle relative to the axial extension of the screw rod (701) and greater than the second angle (β).

10. The operating mechanism according to any of the previous claims, whereby the screw rod (701) comprises a male thread (710) comprising the chamfered thread tip (706) and the spindle nut (702) comprises a female thread (711) corresponding to the male thread (710).

11. The operating mechanism according to any of the previous claims, comprising a rotatable output shaft (11) configured for achieving an opening or closing operation of the switching device (601) by rotation and connected in terms of movement to the spindle nut (702).

12. A switching device (601) comprising a moving contact (602) and the operating mechanism according to any of the previous claims, whereby the operating mechanism is configured to operate the moving contact (602) to achieve an opening or closing operation of the switching device (601).

13. The switching device (601) according to the previous claim, wherein the switching device (601) is provided as an earthing switch with short circuit capability, a disconnector, an isolating and earthing switch, and/or as a fast-acting earthing switch of a gas insulated switchgear.
